# EUROPÄISCHE PATENTANMELDUNG

(11) **EP 2 194 322 A1**
(43) Veröffentlichungstag der Anmeldung: **09.06.2010**
(21) Anmeldenummer: 09013086.5
(22) Anmeldetag: 16.10.2009
(51) Int. Cl.: F23D 14/24, F23D 14/32, C01B 31/02, D01F 9/127, D01F 9/133

(54) **Vorrichtung und Verfahren zum Herstellen von Kohlenstoff-Nanoröhrchen (Carbon nanotubes (CNTs))**

(30) Priorität: 04.12.2008 DE 102008060560
(71) Anmelder: Linde AG, 80331 München (DE)
(72) Erfinder: Heisel, Michael, 82049 Pullach (DE)
(74) Vertreter: Ganahl, Bernhard

(57) **Zusammenfassung**

Die erfindungsgemäße Vorrichtung ist zum Herstellen von Kohlenstoff-Nanoröhrchen aus einem Reaktionsgas ausgebildet. Die Vorrichtung (1) weist einen Brenner (2), zum Mischen des Reaktionsgases mit einem Brenngas und zum Zuführen dieses Gasgemisches einer rohrförmigen Reaktorkammer (3), auf. In der Reaktorkammer wird ein brennender Reaktorstrom ausgebildet, in dem die Kohlenstoff-Nanoröhrchen mittels eines Katalysators entstehen. Des Weiteren ist eine Kühleinrichtung (4) zum Abkühlen des Reaktorstroms vorgesehen. Der Brenner ist als Drallbrenner ausgebildet, so dass das Reaktionsgas und/oder das Heizgas in einen Drall bzw. eine Drehbewegung versetzt werden.

## Beschreibung

Die vorliegende Erfindung betrifft eine Vorrichtung und ein Verfahren zum Herstellen von Kohlenstoff-Nanoröhrchen.

Kohlenstoff-Nanomaterialien weisen vielversprechende Eigenschaften auf. Man unterscheidet einwandige Nanoröhrchen (single-walled nano tubes, SWNTs), die aus einer aufgerollten Graphitschicht mit Durchmessern bis 3 nm bestehen, und mehrwandige Nanotubes (multi-walled nano tubes, MWNTs), die aus konzentrischen Graphitröhrchen mit Durchmessern bis 80 nm aufgebaut sind.

Wie im Spektrum der Wissenschaft Ausgabe August 2008 beschrieben bilden Kohlenstoffatome den Grundbaustein einer Reihe von graphitischen Stoffen den so genannten Graphen. Im Graphit selbst sind die Ebenen zu einer Art molekularem Blätterteig übereinander gestapelt, der wegen der schwachen Bindung zwischen den Schichten relativ bröselig ist. Verbiegt man Graphen - teils durch Einbau von Fünfecken - zu runden Gebilden, entstehen so genannte Fullerene. Dazu gehören fußballförmige "Buckyballs", Zylinder mit Wabenmuster, die als Kohlenstoff-Nanoröhrchen bekannt sind, und verschiedene Sphäroide, die beide Formen vereinen.

Bezüglich der Materialeigenschaften sind vor allem folgende Aspekte interessant:

Nanoröhrchen sind elektrisch leitfähig, bei MWNTs wird die Leitfähigkeit von Metallen erreicht. SWNTs sind zum Teil, abhängig vom Aufrollwinkel der Graphitschicht, supraleitend.

Zur Zeit existiert noch kein technisch ausgereiftes Herstellungsverfahren zur Erzeugung von Kohlenstoff-Nanoröhrchen. Daher übertrifft der derzeitige Preis von Nanomaterialien von ca. 25 €/g den anderer Träger- oder Additivmaterialien um ein Vielfaches. Voraussetzung für die kommerzielle Verwendung der Nanomaterialien ist daher die Entwicklung möglichst kontinuierlicher technischer Syntheseverfahren.

Die drei Grundverfahren zur Herstellung von Kohlenstoff-Nanomaterialien, die bisher aber zumeist im Labormaßstab eingesetzt werden, sind die Lichtbogensynthese, die Laserverdampfung von Graphit und die Gasphasenabscheidung (chemical vapour deposition, CVD). Bei den beiden erstgenannten Verfahren wird Graphit elektrisch bzw. mit Hilfe eines Lasers verdampft, und die in der Gasphase entstehenden Nanoröhrchen werden abgeschieden. Beim CVD-Prozess wird ein kohlenstoffhaltiges Gas - meist Ethylen oder CO - über einen Katalysator geleitet, an dem die Nanoröhrchen bzw. Fasern gebildet werden.

Aus energetischen und apparativen Gründen ist vor allem die CVD-Methode attraktiv für eine technische Anwendung. Dabei unterscheidet man zwischen den rein katalytischen und den Plasma unterstützten Verfahren, wobei letztere auf ein gerichtetes "rasenartiges" Wachstum der Nanoröhrchen bzw. -fasern abzielen.

Beim katalytischen CVD-Verfahren wird der pulverförmige Katalysator in einen Quarzreaktor eingebracht. Bei horizontaler Anordnung wird der Katalysator vom Gas überströmt. Vertikale Reaktoren werden meist als Wirbelschicht betrieben. In beiden Fällen handelt es sich bisher meist um diskontinuierliche (Labor-)Verfahren. Bei diese Anlagenist nachteilig, dass sie zur großtechnischen Herstellung einen sehr großen Bauraum benötigen.

Aus der WO 02/42686 geht ein Brenner und ein Verfahren zur chemischen Umsetzung zweier Gasströme hervor. Der Brenner weist einen Brennerkopf und ein in dem Brennerkopf angeordnetes Gaszuführungsrohr, welches von einem Ringkanal zur Zuführung eines weiteren Gases umgeben ist. In dem Gaszuführungsrohr und in dem Ringkanal sind Mittel zur Erzeugung eines Dralls eines durch das Gaszuführungsrohr bzw. eines durch den Ringkanal strömenden Gases vorgesehen.

Aufgabe der vorliegenden Erfindung ist es eine Vorrichtung und ein Verfahren zum Herstellen einer großen Menge von Kohlenstoff-Nanoröhrchen bereitzustellen.

Die Aufgabe wird mit einer Vorrichtung gemäß Anspruch 1 und einem Verfahren gemäß Anspruch 9 gelöst.

Erfindungsgemäß ist eine Vorrichtung zum Herstellen von Kohlenstoff-Nanoröhrchen aus einem Reaktionsgas vorgesehen. Die Vorrichtung weist einen Brenner, zum Mischen des Reaktionsgases mit einem Brenngas und zum Zuführen dieses Gasgemisches einer rohrförmigen Reaktorkammer, auf. In der Reaktorkammer wird ein brennender Reaktorstrom ausgebildet, in dem die Kohlenstoff-Nanoröhrchen mittels eines Katalysators entstehen. Des Weiteren ist eine Kühleinrichtung zum Abkühlen des Reaktorstroms vorgesehen. Der Brenner ist als Drallbrenner ausgebildet, so dass das Reaktionsgas und/oder das Heizgas in einen Drall bzw. eine Drehbewegung versetzt werden.

Die erfindungsgemäße Vorrichtung ermöglicht es die Verweilzeit, die Reaktionszeit, die Temperatur und die Katalysatormenge in der Reaktorkammer exakt einzustellen. Dadurch ist es erstmals möglich Kohlenstoff-Nanoröhrchen in einer kompakten Anlage großtechnisch bzw. in großen Mengen herzustellen.

Die erfindungsgemäße Vorrichtung kann an nahezu beliebige Produktionsmengen angepasst werden.

Die Reaktorkammer kann den Erfordernissen flexibel angepasst werden. Damit lassen sich die Materialeigenschaften der Kohlenstoff-Nanoröhrchen in gewissen Grenzen an den Bedarf anpassen.

Die Aufheiz- und Abkühlgeschwindigkeiten sind nahezu beliebig einstellbar, was dazu beiträgt optimale Reaktionsbedingungen bereitzustellen.

Die erfindungsgemäße Vorrichtung ist kompakt ausgebildet und arbeitet kontinuierlich.

Die Erfindung wird im Folgenden anhand der Zeichnungen näher erläutert. Diese zeigen schematisch in:
- Fig. 1: die erfindungsgemäße Vorrichtung in einem Längsschnitt,
- Fig. 2A: ein Brenner in einem Längsschnitt,
- Fig. 2B: eine entlang der Linie A-A geschnittene Ansicht des Brenners aus Fig. 2A,
- Fig. 3: eine Mischdüse in einem Längsschnitt, und
- Fig. 4: einen Drallkörper in einer Draufsicht.

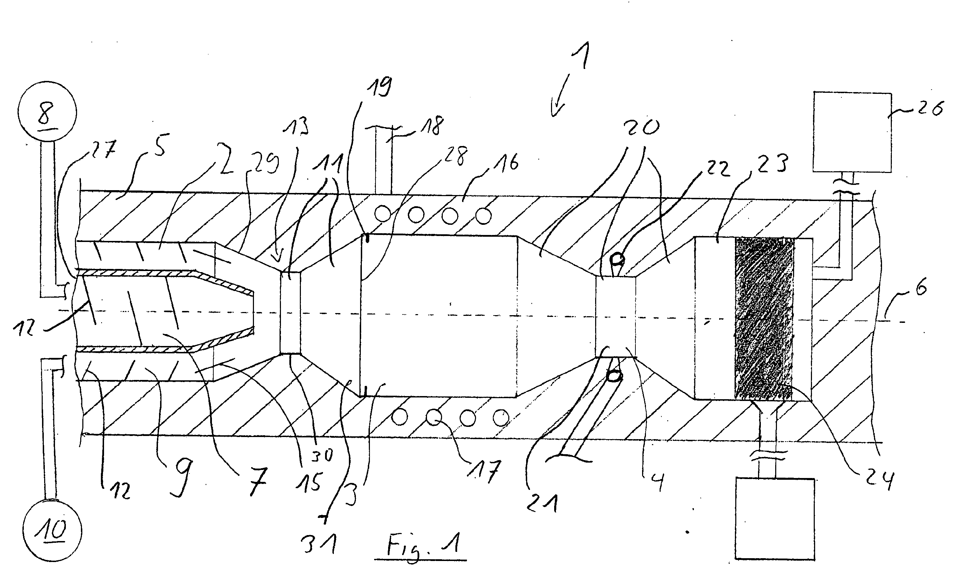

Die erfindungsgemäße Vorrichtung 1 (Fig. 1) zum Herstellen von Kohlenstoff-Nanoröhrchen aus einem Reaktionsgas weist einen Brenner 2, eine rohrförmige Reaktorkammer 3 und eine Kühleinrichtung 4 auf.

Die Bauteile sind in der angegebenen Reihenfolge angeordnet und werden aufeinanderfolgend durchströmt.

Der Brenner 2 ist als Drallbrenner ausgebildet und entspricht im Wesentlichen dem Brenner aus der WO 02/421686, auf die hier vollinhaltlich Bezug genommen wird.

Der Brenner 2 weist ein rohrförmiges Gehäuse 5 mit einem Brennereingang 27 und einem Brennerausgang 28 auf. In dem Gehäuse 5 ist entlang einer Längsachse 6 mittig ein Reaktionsgaszuführungsrohr 7 angeordnet. Das Reaktionsgaszuführungsrohr 7 ist am Brennereingang 27 mit einer Reaktionsgasversorgungsquelle 8 verbunden.

Im Bereich zwischen dem rohrförmigen Gehäuse 5 und dem Reaktionsgaszuführungsrohr 7 ist ein Ringkanal 9 ausgebildet. Der Ringkanal 9 ist am Brennereingang 27 mit einer Heizgasversorgungsquelle 10 verbunden.

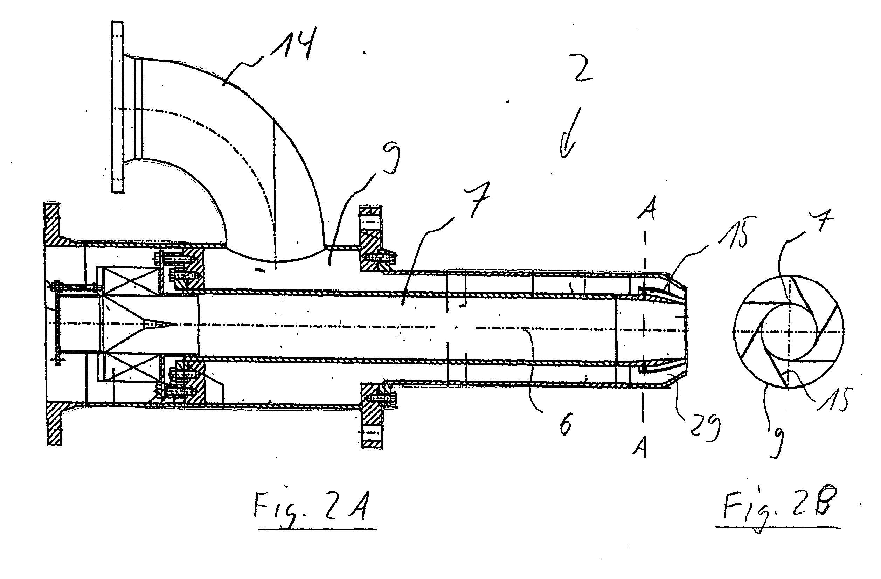

Die Zuführung des Heizgases in den Ringkanal 9 kann auch über eine seitlich am Brenner 2 angeordnete Zuleitung 14 erfolgen (Fig. 2A).

Der Brenner ist zum Führen, Vermischen und Beschleunigen der Gase ausgebildet. Der Brennerabschnitt, in dem das Reaktionsgaszuführungsrohr 7 und der Ringkanal 9 angeordnet sind, wird als Produktkammer bezeichnet.

Das stromabwärtige Ende des Reaktionsgaszuführungsrohres 7 ist konisch ausgebildet, wobei sich sowohl der Innendurchmesser als auch der Außendurchmesser verringert.

Der stromabwärtige Endbereich des Ringkanals 9 ist ebenfalls in Richtung Längsachse 6 geneigt bzw. konisch verjüngt.

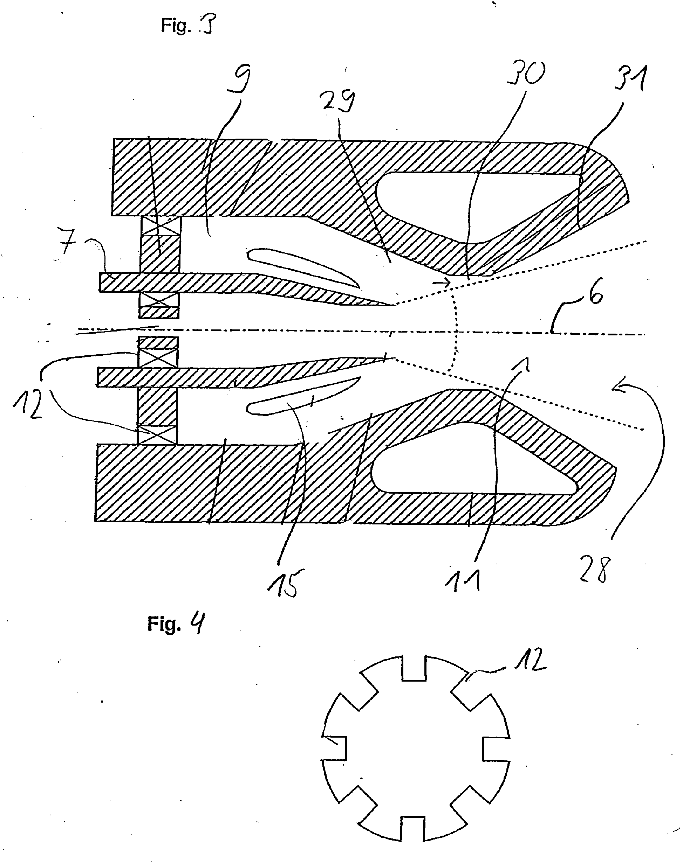

Der stromabwärtige Endbereich des Ringkanals 9 bildet den Einlass einer Mischdüse 13. Diese Mischdüse ist am stromabwärtigen Ende des rohrförmigen Gehäuses 5 des Brenners 2 ausgebildet. Das Ende des Reaktionsgaszuführungsrohres 7 mündet ebenfalls in den Einlass der Mischdüse 13. Die Mischdüse 13 ist z.B. als Venturidüse mit einem sich trichterförmig verjüngenden Bereich 29, einem eingeschnürten Bereich 30 und einem sich trichterförmig aufweitenden Bereich 31 ausgebildet (Fig. 3). Der eingeschnürte Bereich und der sich trichterförmig aufweitende Bereich der Mischdüse 13 bilden eine Mischkammer 11 mit Auslass am Brennerausgang 28 aus.

Zur Verbesserung der Durchmischung des Heizgases und des Reaktionsgases in der Mischdüse 13 sind sowohl im Reaktionsgaszuführungsrohr 7 als auch im Ringkanal 9 Drallkörper 12 angeordnet. Die Drallkörper 12 sind z.B. als Leitbleche ausgebildet, die das durch das Reaktionsgaszuführungsrohr 7 und den Ringkanal 9 strömende Medium zusätzlich zur axialen Bewegungskomponente mit einer radialen Bewegungskomponente beaufschlagen. Auf diese Weise wird das jeweilige hindurchströmende Gas in eine Drehbewegung bzw. in Drall versetzt. Dies führt zu einer sehr guten Durchmischung der beiden Gase in der Mischdüse 13.

Die Verwirbelung des über den Ringskanal 9 zugeführten Gases führt zu einem intensiven radialen Massenaustausch zwischen beiden Gasströmen und somit zu einer schnellen Mischung. Der innere Gasstrom wird durch den äußeren Gasstrom gebündelt, welcher umgekehrt durch den inneren Gasstrom aufgeweitet wird. Diese starke Wechselwirkung zwischen beiden Gasströmen bewirkt eine intensive und schnelle Vermischung. Der Brenner 2 ermöglicht dadurch eine genau definierbare Vermischung der beteiligten Gasströme.

Die Drallkörper 12 können auch als scheibenförmige, im Reaktionsgaszuführungsrohr 7, bzw. ringförmige Körper, im Ringkanal 9, ausgebildet sein, die über ihren Umfang verteilt mehrere Schlitzkanäle aufweisen, die schräg zur Längsachse 6 verlaufen (Fig.4). Dies führt ebenfalls dazu, dass das hindurchströmende Medium zusätzlich zur axialen Bewegungskomponente mit einer radialen Bewegungskomponente beaufschlagt wird.

Im Übergangsbereich des Ringkanals 9 zum Einlass der Mischdüse 13 hin sind in Längsrichtung 6 konzentrisch angeordnete Flügel 15 vorgesehen (Fig. 1, Fig. 2A, B, Fig. 3). Die Flügel sind zum stabilisieren der Gasströmung ausgebildet.

Der Brennerausgang 28 bzw. der sich konisch aufweitende Auslassbereich der Mischdüse 13 des Brenners 2 mündet in die rohrförmig ausgebildete Reaktorkammer 3.

Die Reaktorkammer 3 ist z.B. mit Keramik oder einem anderen geeigneten Material ausgekleidet bzw. isoliert. In einer Gehäusewandung 16 der Reaktorkammer 3 können umlaufend angeordnete Kühlkanäle 17 vorgesehen sein. Die Kühlkanäle 17 sind mit einem entsprechenden Kühlkreislauf 18 verbunden, der beispielsweise eine Wasserkühlung aufweist.

Die Reaktorkammer 3 weist am Eingang eine Zündeinrichtung 19 zum Entzünden des Reaktorstroms auf.

Das stromabwärtige Ende der Reaktorkammer 3 mündet in einen Düsenabschnitt 20 bzw. in eine Quenchdüse. Der Düsenabschnitt 20 kann in Form einer Venturidüse ausgebildet sein. Der Querschnitt des konusförmigen Düsenabschnitts 20 verjüngt sich gegenüber der Reaktorkammer 3 um etwa ein fünftel. Durch die daraus resultierende Beschleunigung wird eine Rückvermischung des Kohlenstoff-Nanoröhrchen enthaltenden Produktgases mit dem Reaktorstrom vermieden. Im Bereich des geringsten Querschnitts 21 des Düsenabschnitts 20 sind umlaufend Düsen 22 vorgesehen, um das Kohlenstoff-Nanoröhrchen enthaltende Produktgas abzukühlen. Die Düsen 22 sind zum Zuführen von Kühlgas bzw. Quenchgas aus einer Kühlgasversorgungsquelle ausgebildet. Diese Anordnung wird als Kühleinrichtung 4 bezeichnet.

Das stromabwärtige Ende des Düsenabschnitts 20 ist mit einer Produktkammer 23 verbunden. In der Produktkammer 23 ist eine sich über den gesamten Querschnitt der Produktkammer 23 erstreckende Abscheideeinrichtung 24 angeordnet. Die Abscheideeinrichtung 24 ist derart ausgebildet, dass die Kohlenstoff-Nanoröhrchen vom Produktgas/Kühlgas-Gemisch getrennt werden. Die Abscheideeinrichtung kann als Zentrifuge ausgebildet sein, die das Kohlenstoff-Nanoröhrchen enthaltende Produktgas verwirbelt, wobei sich die Kohlenstoff-Nanoröhrchen am Rand der Zentrifuge ansammeln. Dort könen sie dann entnommen werden. Es sind auch andere Abscheidevorrichtungen oder z.B. Filter denkbar. Es kann auch vorgesehen sein, die Kohlenstoff-Nanoröhrchen bzw. die CNT-Fäden auf einer Rolle aufzuwickeln, um sie auf diese Weise vom Produktgas/Kühlgas-Gemisch zu trennen.

An die Produktkammer 23 ist eine Gasableitung 25 angeschlossen, um das Gemisch aus Produktgas (Reaktions-/Heiz-) und Kühlgas abzuführen. Die Gasableitung 25 mündet in eine Trenneinrichtung 26, in der das Kühlgas vom Produktgas getrennt wird. Auf diese Weise kann das relativ teure Kühlgas zurückgewonnen und erneut verwendet werden. Die Trenneinrichtung 26 trennt die beiden Gase z.B. über ein bekanntes Tieftemperaturverfahren oder über ein anderes bekanntes Gastrennverfahren wie z.B. Druckwechsel-Adsorption (Pressure Swing Adsorption, PSA), Gaswäsche oder Extraktion.

Der Brenner 2 kann ebenfalls eine Kühleinrichtung aufweisen, um die exakte Temperatur der Gase für die Verbrennung einzustellen.

Es kann auch vorgesehen sein, dass entweder das Reaktionsgaszuführungsrohr 7 oder der Ringkanal 9 oder keiner von beiden Mittel bzw. Drallkörper aufweist, um das durch sie hindurchströmende Gas in eine Drall- bzw. eine Drehbewegung zu versetzen.

Im Folgenden wird das erfindungsgemäße Verfahren anhand der erfindungsgemäßen Vorrichtung erläutert.

Über die Reaktionsgasversorgungsquelle 10 wird das Reaktionsgaszuführungsrohr 7 mit einem Reaktionsgaskatalysatorgemisch gespeist. Das Reaktionsgas ist vorzugsweise Ethen (C₂H₄) oder ein anderes geeignetes Reaktionsgas, wie z.B. CO, CH₄, C₂H₂, C₆H₆ oder auch gesättigte Kohlenwasserstoffe wie z.B. Ethan, Propan und Butan. Grundsätzlich ist auch jede andere gasförmige organische Verbindung denkbar. Als Katalysator ist zum Beispiel Fe(CO)₅ oder auch Cobalt (Co), Nickel (Ni), Molybdän (Mo) vorgesehen.

Über die Heizgasversorgungsquelle 8 wird dem Ringkanal 9 ein Heizgas zugeführt. Das Heizgas ist zum Beispiel ein sauerstoffhaltiges Gas oder auch reiner Sauerstoff (O₂). Als Heizgas könne auch andere geeignete sehr heiße Gase eingesetzt werden, die möglichst inert sein sollten wie z.B. heißer Stickstoff, oder CO₂. Als sehr heiße Gase werden Gase mit einer Temperatur von über 1000°C verstanden.

Über die Drallkörper 12 wird dem Heizgas und dem Reaktionsgaskatalysatorgemisch eine Drallströmung aufgezwungen, d.h., die beiden Gase werden in eine Bewegung mit einer axialen und einer radialen Richtungskomponente versetzt.

Über die Flügel 15 wird das im Ringkanal 9 strömende Gas in axialer Richtung beruhigt.

In der Mischdüse 13 vermischen sich das Reaktionsgaskatalysatorgemisch und das Heizgas zu einem Reaktorstrom, wobei sie aufgrund der Querschnittsverengung der in Venturiform ausgebildeten Mischdüse beschleunigt werden und in die Reaktorkammer 3 eingedüst werden.

Aufgrund der Beschleunigung wird eine Rückströmung des Reaktorstroms aus der Reaktorkammer in die Mischdüse 13 bzw. den Brenner 2 vermieden.

Durch die doppelte Verdrallung, des Reaktionsgases und des Heizgases, können die Gase in genau definierbaren Bereichen optimal vermischt werden. Dabei ist in weiten Grenzen die Aufweitung der nach dem Austritt der Gase aus dem Brenner entstehenden Flamme und die Verweilzeit der Gase in der Reaktorkammer 3 einstellbar und an die chemische Reaktion anpassbar. Die Flamme ist damit optimal auf die Reaktorkammer abstimmbar. Die Temperatur in der Reaktorkammer 3 und die Geschwindigkeitsverteilung der beteiligten Gase können berechnet und an die gewünschten Verfahrensabläufe angepasst werden. Die Kinetik der Reaktion in der Reaktorkammer ist somit beeinflussbar.

Über das Verhältnis der Summe der Beträge der Tangentialimpulse zur Summe der Axialimpulse bzw. über das Verhältnis von Umfangsgeschwindigkeit zu Axialgeschwindigkeit wird eine Gesamtdrallzahl definiert. Diese beeinflusst u.a. die Strahlaufweitung in der Mischdüse und bei deren Verlassen. Die Gesamtdrallzahl stellt damit einen entscheidenden Parameter dar, über den die Flammführung und die Verweilzeit der Gase in der Reaktorkammer geregelt werden kann.

Direkt nach dem Eintritt in die Reaktorkammer 3 weitet sich der Reaktorstrom aus dem Reaktionsgaskatalysatorgemisch und dem Heizgas aufgrund der Zentrifugalkraft auf. Hierdurch wird nahe am Eingang bereits ein gleichmäßig verteilter und gleichmäßig durchmischter Reaktorstrom erhalten. Dieser Reaktorstrom reagiert über einen Großteil seiner Querschnittsfläche, so dass auf dem überwiegenden Teil der Querschnittsfläche im wesentlichen gleiche Temperaturen erzeugt werden. Beim Durchströmen der Reaktorkammer 3 stellen sich über einen beträchtlichen Teil der Länge der Reaktorkammer 3 etwa gleiche Reaktionsbedingungen ein.

Mittels der Isolierung und der Kühlung der Reaktorkammer 3 ist die Temperatur in der Reaktorkammer 3 exakt einstellbar, um optimale Reaktionsbedingungen bereitzustellen. Über die Länge der Reaktorkammer 3 und die Geschwindigkeit des einströmeden Reaktorstroms sind die Reaktionszeit und die Verweilzeit präzise einstellbar. Diese beiden Parameter sind entscheidend für die Herstellung der Kohlenstoff-Nanoröhrchen.

In der Reaktorkammer 3, in der die chemische Umsetzung stattfinden soll, können die Temperatur-, Strömungs- und Gaszusammensetzungsverhältnisse an die gewünschte chemische Reaktion angepasst werden. Die Aufweitung der bei der Reaktion der beiden Gasströme entstehenden Flamme ist über die Stärke der beiden Drallströmungen in weiten Grenzen einstellbar. Durch die Drallströmung lässt sich die Flammenform gezielt gestalten. Damit ist eine optimale Anpassung an die Größe der Reaktorkammer 3 bzw. des Reaktionsraumes möglich. Ferner kann durch geeignete Wahl der Strömungsführung die Verweilzeit in der Reaktorkammer 3 optimiert werden.

Die Verdrallung beider an der Reaktion beteiligter Gasströme kann so erfolgen, dass die beiden Drallströmungen gleichsinnig oder gegensinnig ausgerichtet sind. Eine gegensinnige Verdrallung, das heißt eine Verdrallung, bei der die Drallströmungen der beiden Gasströme in dem Kontaktbereich der beiden Gasströme einander entgegengerichtet sind, hat den Vorteil, dass die Gasströme sehr stark miteinander vermischt werden. Die chemische Reaktion wird beschleunigt, das heißt es erfolgt ein schnelles komplettes Durchreagieren des Reaktionsgemisches der Gase. Die Verdrallung des nach der Zusammenführung der Gasströme entstehenden Gesamtstrahles ist dagegen relativ gering, da sich durch die gegensinnige Verdrallung der beiden Gasströme die beiden ursprünglichen Drallströmungen teilweise aufheben. Die entstehende Flamme weitet sich dadurch relativ wenig auf.

Vorzugsweise werden die einzelnen Drallströmungen jedoch so ausgerichtet, dass sie gleichsinnig verlaufen. In diesem Fall verstärken sich die Drallströmungen in dem Kontaktbereich der beiden Gasströme, so dass eine relativ hohe Gesamtdrallzahl erreicht wird. Dies hat eine starke Aufweitung des Gesamtstrahles zur Folge. Die Geschwindigkeit entlang der Längsachse 6 verkleinert sich in der Reaktorkammer. Aufgrund der verringerten Strahlgeschwindigkeit erhöht sich die Verweilzeit der Reaktionspartner in der Reaktorkammer im Vergleich zu Reaktionsführungen, bei denen höchstens einer der beteiligten Gasströme verdrallt wird.

Die Flammentopologie ist bei einer gleichsinnigen Verdrallung besonders gut einstellbar. Axiale Länge und radiale Ausdehnung der Flamme sind wählbar und sowohl an die Reaktorkammer 3 als auch an die Reaktionsbedingungen anpassbar. Zudem ist die Vermischung der beiden Gasströme in der Nähe des Brennerausgangs nicht so intensiv wie bei einer gegensinnigen Verdrallung der Gasströme, so dass die thermische Belastung am Brennerausgang gesenkt wird.

Die gleichsinnige Verdrallung hat außerdem den Vorteil, dass bei gewünschter Gesamtdrallzahl der Drall eines der beiden Gasströme niedriger gewählt werden kann, als dies bei einer gegensinnigen Verdrallung oder bei der bekannten Verdrallung nur eines Stromes möglich ist.

Vorzugsweise werden die über das Reaktionsgaszuführungsrohr 7 und den Ringkanal 9 zugeführten Gasströme unter einem bestimmten Winkel zusammengeführt, um die Vermischung der Ströme zu verbessern. Nach dem Zusammentreffen der beiden Ströme wird der äußere Strom durch den zentralen Strom aufgeweitet. Der äußere durch den Ringkanal zugeführte Strom bewegt sich somit zunächst auf die Längsachse 6 bzw. die Brennerachse 6 zu und dann von der Brennerachse weg. Erfolgt dieser Richtungswechsel zu schnell, können Wirbel auftreten, die zu einer Rückströmung heißer Gase zum Gaszuführungsrohr führen können.

Von Vorteil schließt sich an den Ringkanal 9 eine Mischkammer 11 an, deren Innendurchmesser in Strömungsrichtung zunimmt. Durch diese werden die Flammen zusammengehalten und die Verbrennung gefördert. Es ist günstig, wenn die Mittel zur Erzeugung eines Dralls in dem Reaktionsgaszuführungsrohr 7 und/oder in dem Ringkanal 9 Strömungskanäle aufweisen, die tangential gegen die Strömungsrichtung geneigt sind. Eine derartige Ausführung der Mittel zur Drallerzeugung ist leicht herstellbar, beispielsweise können die Kanäle gefräst werden. Über den Winkel der Strömungskanäle kann die Verdrallung des Stromes einfach vorgegeben werden. Die Verdrallung kann auch über entsprechend ausgerichtete Leitbleche, Leitschaufeln oder Tragflügel in dem Ringkanal 9 und/oder dem Reaktionsgaszuführungsrohr erzeugt werden. Diese Ausführung ist insbesondere dann vorzuziehen, wenn der durch die Verdrallung entstehende Druckverlust minimiert werden soll.

Vorzugsweise sind die Mittel zur Erzeugung eines Dralles in dem Reaktionsgaszuführungsrohr 7 und/oder in dem Ringkanal 9 verstellbar, so dass unterschiedlich starke Drallströmungen erzeugt werden können. Durch geeignete Wahl der Drallzahl, d.h. der Stärke der Verdrallung, der beteiligten Gasströme können die Strömungsverhältnisse an die ablaufende chemische Reaktion und an die zugeführten Gasmengen angepasst werden. Der Lastbereich des Brenners kann auf diese Weise verstellt und insbesondere vergrößert werden.

Der Reaktorstrom wird über die Zündeinrichtung 19 entzündet. Die Flammtemperatur liegt im Bereich zwischen 500 und 1200°C und vorzugsweise zwischen 600 und 800°C. In der Reaktorkammer 3 bilden sich im Plasma der Flamme mittels des Katalysators aus freien Kohlenstoffradikalen Kohlenstoff-Nanoröhrchen. Die Verweilzeit und somit die Reaktionszeit wird über die Länge der Reaktorkammer 3 bestimmt. Die Reaktionszeit bestimmt zudem welche Art von Kohlenstoff-Nanoröhrchen entstehen. Dabei können sowohl einwandige als auch mehrwandige Kohlenstoff-Nanoröhrchen erzeugt werden.

Im Anschluss strömt das Kohlenstoff-Nanoröhrchen enthaltende Produktgas durch den Düsenabschnitt 20 bzw. die Quenchdüse. Im Düsenabschnitt wird dieses Gemisch durch Eindüsen eines gasförmigen Kühlmediums gekühlt, um die Reaktion zu beenden. Dieser Vorgang wir als Gasquench bezeichnet. Als Kühlmedium bzw. Kühlgas bzw. Quenchgas wird z.B. He, Ar, N₂ oder H₂ verwendet. CO₂ und Kohlenwasserstoffe sind ungünstig, da sie an der Reaktion, zumindest bei hohen Temperatur teilnehmen könnten.

Durch die schnelle Abkühlung des Produktgas-Kohlenstoff-Nanoröhrchengemisches im Düsenabschnitt 20. können weitere Reaktionen effizient verhindert werden. Bei zu kurzer oder zu langer Verweilzeit würden Nebenreaktionen überhand nehmen, so dass statt eines bestimmten Typs von Kohlenstoff-Nanoröhrchen undefinierte Polymere aus der Reaktion von Radikalen entstehen. Eine zu lange Verweilzeit würde Rußbildung zur Folge haben. Einen ähnlichen Einfluss auf die Reaktion hat die Reaktionstemperatur.

Durch die Ausbildung des Düsenabschnitts 20 als Venturidüse wird das Gas beschleunigt, wodurch eine Rückströmung in die Reaktorkammer 3 verhindert und die Reaktion zum gewünschten Zeitpunkt abrupt beendet wird.

Im Anschluss strömt das Produktgas-Kohlenstoff-Nanoröhrchengemisch in die Produktkammer 23. Die Kohlenstoff-Nanoröhrchen werden über den Zentrifugalabscheider vom Produktgas-/Kühlgasgemisch getrennt. Mittels der Einrichtung zum Abführen der Kohlenstoff-Nanoröhrchen werden diese aus der Produktkammer 23 entnommen.

Über die an die Produktkammer 23 angeschlossene Gasableitung 25 wird das Produktgas/Kühlgasgemisch abgeführt und der Trenneinrichtung 26 zugeführt. Dort werden beide durch Abkühlen und die damit verbundene Verflüssigung getrennt.

Mit dem erfindungsgemäßen Reaktor wird einen homogene Durchmischung des Reaktorstroms gewährleistet. Die Temperatur ist nahezu konstant über die gesamte Reaktorkammer und entsprechend den geeigneten Parametern zur Herstellung von z.B. Kohlenstoff-Nanoröhrchen einstellbar. Die Verweilzeit und somit die Reaktionszeit im Reaktor ist entsprechend, z.B. über die Länge der Reaktorkammer, einstellbar. Dadurch ist es möglich konstante Bedingungen über die gesamte Reaktorkammer, insbesondere über eine sehr große Reaktorkammer, bereitzustellen. Die zur Herstellung von Kohlenstoff-Nanoröhrchen notwendigen Reaktionsbedingungen sind über eine große Strecke und einen großen Querschnittsbereich sehr präzise einstellbar.

Grundsätzlich ist es auch denkbar mit der vorliegenden Erfindung andere Produkte aus Kohlenstoffatomen herzustellen wie z.B. Graphen.

### Bezugszeichenliste

- 1: Vorrichtung
- 2: Brenner
- 3: Reaktorkammer
- 4: Kühleinrichtung
- 5: Gehäuse
- 6: Längsachse
- 7: Reaktionsgaszuführungsrohr
- 8: Reaktionsgasversorgungsquelle
- 9: Ringkanal
- 10: Heizgasversorgungsquelle
- 11: Mischkammer
- 12: Drallkörper
- 13: Mischdüse
- 14: Zuleitung
- 15: Flügel
- 16: Gehäusewandung
- 17: Kühlkanal
- 18: Kühlkreislauf
- 19: Zündeinrichtung
- 20: Düsenabschnitt
- 21: Bereich des geringsten Querschnitts
- 22: Düsen
- 23: Produktkammer
- 24: Zentrifugalabscheider
- 25: Gasableitung
- 26: Trenneinrichtung
- 27: Brennereingang
- 28: Brennerausgang
- 29: trichterförmig verjüngter Bereich
- 30: eingeschnürter Bereich
- 31: trichterförmig aufgeweiteter Bereich

## Patentansprüche

1. Vorrichtung zum Herstellen von Kohlenstoff-Nanoröhrchen (Carbon nanotubes (CNTs)) aus einem Reaktionsgas, mit
einem Brenner (2) zum Mischen des Reaktionsgases mit einem Brenngas und zum Zuführen dieses Gasgemisches
einer rohrförmigen Reaktorkammer (3) an/in welche der Brenner (2) mündet, um einen brennenden Reaktionsstrom auszubilden, in dem CNTs mittels eines Katalysators entstehen, und
einer Kühleinrichtung (4) zum Abkühlen des Reaktionsstroms,
wobei der Brenner (2) als Drallbrenner ausgebildet ist, so dass zumindest das Reaktionsgas und/oder das Heizgas in einen Drall bzw. eine Drehbewegung versetzt werden.

2. Vorrichtung nach Anspruch 1,
**dadurch gekennzeichnet,**
**dass** der Drallbrenner (2) eine Strömungskammer mit zwei separaten Strömungskanälen (7, 9) aufweist

3. Vorrichtung nach Anspruch 1 oder 2,
**dadurch gekennzeichnet,**
**dass** der Drallbrenner (2) eine Mischdüse (13) aufweist, in die die beiden Strömungskanäle (7, 9) münden.

4. Vorrichtung nach einem der Ansprüche 1 bis 3,
**dadurch gekennzeichnet,**
**dass** die Kühleinrichtung (4) eine Quenchdüse (20) ist, die sich an die Reaktorkammer (3) anschließt, die konusförmig ausgebildet ist und in der der Reaktionsstrom über ein Kühlmedium abgekühlt wird.

5. Vorrichtung nach einem der Ansprüche 1 bis 4,
**dadurch gekennzeichnet,**
**dass** eine der Kühleinrichtung (20) nachgeschaltete Trenneinrichtung (26) zum Trennen des Kühlmediums und des Reaktionstroms vorgesehen ist.

6. Vorrichtung nach einem der Ansprüche 1 bis 5,
**dadurch gekennzeichnet,**
**dass** die Stömungskammer einen mittig angeordneten rohrförmigen Gaskanal (7) und einen den rohrfömigen Gaskanal umgebenden ringförmigen Gaskanal (9) aufweist.

7. Vorrichtung nach einem der Ansprüche 1 bis 6,
**dadurch gekennzeichnet,**
**dass** im rohrförmigen und/oder im ringförmigen Gaskanal (7, 9) Drallkörper (12) vorgesehen sind, um ein durch sie hindurchströmendes Gas in eine Drallbewegung zu versetzen.

8. Vorrichtung nach einem der Ansprüche 1 bis 7,
**dadurch gekennzeichnet,**
**dass** eine Produktkammer (23) mit Filter (24) vorgesehen ist in der die Kohlenstoff-Nanoröhrchen vom Reaktionsstrom getrennt werden.

9. Verfahren zum Herstellen von Kohlenstoff-Nanoröhrchen umfassend folgende Schritte:
- Mischen eines (gasförmigen) Katalysators, eines Reaktionsgases und eines Heizgases zu einem Reaktorgasgemisch,
- Eindüsen dieses Reaktorgemisches in eine Reaktorkammer (3),
- Durchführen einer kontinuierlichen Verbrennung des Reaktorgasgemisches wobei sich aus dem Reaktionsgas Kohlenstoff-Nanoröhrchen mittels des Katalysator(gase)s bilden, wodurch sich ein Kohlenstoff-Nanoröhrchen enthaltendes Produktgas ergibt,
- Abkühlen des Kohlenstoff-Nanoröhrchen enthaltenden Produktgases,
**dadurch gekennzeichnet,**
**dass** das Reaktorgasgemisch mit einem Drall in die Reaktorkammer (3) eingedüst wird.

10. Verfahren nach Anspruch 9,
**dadurch gekennzeichnet,**
**dass** das Reaktionsgas eine organische Verbindung, insbesondere Ethen, ist.

11. Verfahren nach Anspruch 9 oder 10,
**dadurch gekennzeichnet,**
**dass** die Reaktion bei einer Temperatur zwischen 600°C und 1200°C und vorzugsweise zwischen 600°C und 800°C erfolgt.

12. Verfahren nach einem der Ansprüche 9 bis 11,
**dadurch gekennzeichnet,**
**dass** das Kohlenstoff-Nanoröhrchen enthaltende Produktgas über ein Kühlmedium abgekühlt bzw. gequencht wird.

13. Verfahren nach einem der Ansprüche 9 bis 12,
**dadurch gekennzeichnet,**
**dass** das Kühlmedium gasförmig ist.

14. Verfahren nach einem der Ansprüche 12 bis 13,
**dadurch gekennzeichnet,**
**dass** das Produktgas und das gasförmige Kühlmedium in einer Trenneinrichtung (26) getrennt werden.

15. Verfahren nach einem der Ansprüche 9 bis 14,
**dadurch gekennzeichnet,**
**dass** das Reaktionsgas und/oder das Heizgas über Drallkörper (12) in eine Drehbewegung versetzt werden.
